Europäisches Patentamt

European Patent Office

Office européen des brevets

(19)

(11) Numéro de publication: **0 398 809**
**A1**

(12) **DEMANDE DE BREVET EUROPEEN**

(21) Numéro de dépôt: **90401317.4**

(22) Date de dépôt: **17.05.90**

(51) Int. Cl.⁵: **G01G 19/10**

(30) Priorité: **17.05.89 FR 8906423**

(43) Date de publication de la demande:
**22.11.90 Bulletin 90/47**

(84) Etats contractants désignés:
**DE ES FR GB SE**

(71) Demandeur: **ASSOCIATION POUR LA RATIONALISATION ET LA MECANISATION DE L'EXPLOITATION FORESTIERE A.R.M.E.F.**
**164, Boulevard Haussmann**
**F-75008 Paris(FR)**

(72) Inventeur: **Pomies, Jean-Pierre**
**La Grand'Maison, Faucourt**
**F-45200 Montargis(FR)**

(74) Mandataire: **Nony, Michel et al**
**Cabinet NONY & CIE, 29, rue Cambacérès**
**F-75008 Paris(FR)**

(54) **Procédé et dispositifs de mesure dynamique d'une charge en mouvement dans un plan vertical.**

(57) L'invention est relative à un procédé et dispositif de mesure dynamique d'une charge en déplacement dans un plan vertical, cette charge subissant une force s'exerçant de bas en haut.

On détermine la valeur de la charge à partir de sa vitesse de déplacement en une portion déterminée de sa course et d'un paramètre présentant une relation avec ladite force dans cette même portion de course. Le dispositif comprend un capteur (4) de la vitesse de montée de la charge dans une portion déterminée de sa course, des moyens de mesure (3) de la force subie de bas en haut par la charge pendant sa montée dans une portion déterminée de sa course, et des moyens de traitement (6) pour déduire de la vitesse de déplacement de la charge et de ladite force la valeur de ladite charge.

**FIG.1**

EP 0 398 809 A1

La présente invention concerne un procédé et des dispositifs pour la mesure dynamique d'une charge en déplacement dans un plan vertical.

Il est souvent utile lorsque l'on procède au levage d'une charge, par exemple pour la transférer du sol à un moyen de transport, de procéder également à sa pesée. Il est ainsi possible de connaître, par cumul, la quantité de matière chargée dans ledit moyen de transport ou la quantité totale manutentionnée pendant une période de temps déterminée telle qu'un poste, une journée ou une semaine.

La connaissance des charges manutentionnées est nécessaire, par exemple, dans le domaine du débardage du bois ou dans le domaine minier pour assurer une bonne gestion de l'exploitation.

L'inconvénient des pesées conventionnelles réside dans le fait qu'il est nécessaire d'interrompre le levage de chaque charge de manière à l'immobiliser afin de procéder à une mesure significative, et une telle interruption du levage constitue une perte de temps préjudiciable au rendement de l'opération de manutention.

De plus, pour un certain nombre d'exploitations, par exemple dans le domaine minier, il est hautement souhaitable d'opérer deux mesures. En effet, il arrive assez souvent que la nature et les caractéristiques de la matière extraite ne permettent pas de vider de façon totale le moyen de transport, par exemple un godet monté sur locotracteur. Dans un tel cas, si l'on veut connaître la quantité de matière effectivement déversée par ce godet, par exemple dans le camion qui va l'amener au carreau de traitement, il est nécessaire de mesurer la charge totale portée par le godet, puis la quantité de matière non déversée lors du vidage du godet pour en déduire la quantité effectivement déversée.

La présente invention a pour but de remédier à ces inconvénients en fournissant un procédé et des dispositifs permettant d'effectuer de telles pesées sans interrompre les opérations de manutention.

A cet effet, l'invention a tout d'abord pour objet un procédé de mesure dynamique d'une charge en déplacement dans un plan vertical, cette charge subissant une force s'exerçant de bas en haut, caractérisé en ce que l'on détermine la valeur de ladite charge à partir de sa vitesse de déplacement en une portion déterminée de sa course, et d'un paramètre présentant une relation avec ladite force dans cette même portion de course.

La déposante a en effet constaté qu'il existait une relation entre la valeur de la charge et les valeurs de la force et de la vitesse si bien que la première peut être déduite de ces deux paramètres.

Pour cela, on peut procéder, pour deux charges connues, à un étalonnage englobant deux vitesses de déplacement dans un plan vertical pour chacune des deux charges qui constituent ainsi des charges étalons.

En effet, il s'est avéré que les courbes caractéristiques de la force verticale en fonction du carré de la vitesse de déplacement sont des droites dont les coefficients dépendent de la charge.

Par conséquent, si l'on effectue deux déplacements à deux vitesses différentes avec la première charge étalon $W_0$ (par exemple moyen de levage à vide), on peut tracer la droite caractéristique de cette première charge étalon $W_0$ dans le plan ($v^2$, f). Si l'on recommence avec deux vitesses différentes pour une deuxième charge étalon $W_1$ (par exemple moyen de levage à plein), on peut tracer dans le même plan la droite caractéristique correspondant à cette deuxième charge étalon $W_1$.

Bien entendu, cet étalonnage est réalisé une fois pour toutes lors de la mise en service du dispositif utilisé pour la mise en oeuvre de l'invention.

En fait, il a en outre été constaté que, dans le cas où le déplacement de la charge est effectué à l'aide d'un engin muni d'un vérin hydraulique, la charge varie linéairement, pour une vitesse donnée, avec la pression existant dans ledit vérin.

On peut donc déterminer, à partir de l'étalonnage, les pressions $P_0$ (v) et $P_1$ (v) existant dans le vérin et correspondant aux charges étalons $W_0$ et $W_1$ pour la vitesse de levage mesurée v, et déduire la charge effective W à partir de ces pressions $P_0$ - (v) et $P_1$ (v) et de la pression P mesurée dans le vérin.

Cette charge effective peut alors être calculée par la relation :

$$\frac{W_1 - W}{W_1 - W_0} = \frac{P_1(v) - P(v)}{P_1(v) - P_0(v)}$$

La demanderesse a également constaté que, lorsque la charge à mesurer était manutentionnée à l'aide d'un vérin hydraulique, la méthode de l'étalonnage permettait d'intégrer, à la descente, la mesure de la force verticale dans la mesure de la seule vitesse de déplacement. Pour cela, il suffit de maintenir les sections du circuit hydraulique du vérin à une valeur constante lorsque la charge se trouve dans la portion déterminée de la descente où l'on pratique la mesure de la vitesse.

Dans ce cas, on procède tout d'abord, dans cette portion déterminée de la descente, à la mesure de la vitesse d'au moins deux charges étalons. La courbe issue de ces mesures est une droite sur laquelle il est possible de lire directement la mesure d'une charge en fonction du carré de la vitesse.

Connaissant ainsi les vitesses $v_0$ et $v_1$ correspondant aux charges étalons $W_0$ et $W_1$, on peut déduire la charge effective $W$ à partir de la vitesse $v$ mesurée dans la portion déterminée de la descente par la relation

$$\frac{W_1 - W}{W_1 - W_0} = \frac{v_1^2 - v^2}{v_1^2 - v_0^2}$$

Une application intéressante de l'invention est donc de permettre une double mesure d'un engin de manutention, d'une part au levage, après remplissage, et d'autre part à la descente, après vidage, et d'en déduire la charge effectivement déversée.

Dans le cas d'une charge non liée rigidement aux moyens de levage, on peut, afin d'éliminer l'influence des oscillations de cette charge, opérer de la manière suivante :
- effectuer une série de mesures au cours du déplacement dans la portion déterminée ;
- calculer la moyenne des mesures de la mesure 1 à une mesure n ;
- calculer la moyenne des mesures de la mesure 2 à la mesure n + 1 ;
- comparer cette deuxième moyenne à la première ;
- retenir cette deuxième moyenne si sa différence avec la première est inférieure à un seuil donné
- sinon, calculer la moyenne des mesures de la mesure 3 à la mesure n + 2, la comparer à la deuxième moyenne et la retenir ou calculer une quatrième mesure de la mesure 4 à la mesure n + 3 suivant la différence avec la deuxième moyenne etc ... jusqu'à ce que l'on arrive à une moyenne dont la différence avec la moyenne précédente soit inférieure au dit seuil donné.

La présente invention a également pour objet un dispositif pour la mise en oeuvre du procédé exposé ci-dessus en vue de la mesure d'une charge manutentionnée à l'aide d'un vérin hydraulique, caractérisé en ce qu'il comprend un capteur de la vitesse de déplacement de la charge à la montée, des moyens de mesure de la pression dans le vérin et des moyens de traitement des informations fournies par ledit capteur et lesdits moyens de mesure pour en déduire la valeur effective de la charge.

Dans un mode de réalisation de l'invention, le capteur de vitesse est un capteur électro-magnétique agencé pour coopérer avec une pièce métallique, le capteur et ladite pièce étant en mouvement relatif lors du déplacement de la charge, la vitesse de déplacement étant déduite de la durée de passage de la pièce métallique devant le capteur.

L'invention a aussi pour objet un dispositif pour la mesure à la descente d'une charge manutentionnée à l'aide d'un vérin hydraulique caractérisé en ce qu'il comprend des moyens de blocage à une valeur constante des sections du circuit hydraulique du vérin, un capteur de vitesse de déplacement de la charge à la descente, et des moyens de traitement des informations données par ledit capteur pour en déduire la valeur de la charge.

L'invention a enfin pour objet un dispositif caractérisé en ce qu'il comporte des moyens pour intégrer la mesure faite d'une charge à sa montée et celle faite à sa descente et des moyens pour en déduire la différence.

On décrira maintenant, à titre d'exemples non limitatifs, deux variantes de réalisation de l'invention en référence aux dessins schématiques annexés dans lesquels :
- la figure 1 représente, vu de côté, un engin de levage manoeuvré par vérin hydraulique, et équipé d'un dispositif selon l'invention,
- la figure 2 représente les courbes caractéristiques de l'engin de levage dans le plan $(v^2, P)$,
- la figure 3 représente la variation de la charge en fonction de la pression dans le vérin pour une vitesse donnée,
- la figure 4 est un organigramme du procédé selon l'invention appliqué à la mesure d'une charge au cours de son levage,
- la figure 5 représente la variation de la charge en fonction de la vitesse de descente,
- la figure 6 est un organigramme du procédé selon l'invention appliqué à la mesure d'une charge au cours de sa descente.

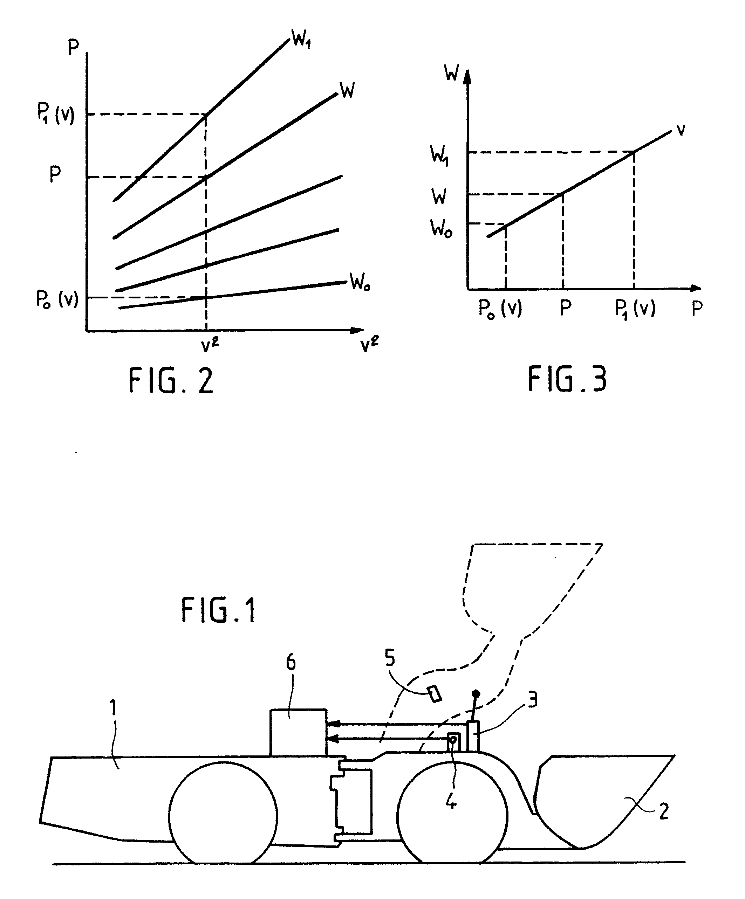

La figure 1 représente un engin de levage 1 muni d'un godet 2 destiné par exemple à charger du minerai.

L'invention a pour but de mesurer la charge de minerai contenue dans le godet 2 au cours de son levage de la position représentée en traits pleins à la position représentée en traits interrompus.

Ce levage est réalisé à l'aide d'un vérin 3.

Par ailleurs, un capteur électro-magnétique 4 est monte fixe sur l'engin 1, et une pièce métallique 5 est disposée sur le levier de support du godet 2, de telle sorte qu'au cours du levage de ce dernier, la pièce 5 passe devant le capteur 4.

Au moment où la pièce 5 commence à passer devant le capteur 4, celui-ci détecte une variation du champ magnétique, puis une nouvelle variation lorsque la pièce 5 a fini de passer devant lui.

La valeur de la pression dans le vérin 3 ainsi que la sortie du capteur 4 sont appliquées en entrée d'une unité de traitement 6.

De la durée de passage de la pièce métallique 5 devant le capteur 4, l'unité de traitement déduit la vitesse de levage et déduit la valeur de la charge à partir de cette vitesse et à partir de la pression dans le vérin 3 de la manière que l'on va maintenant décrire.

Si l'on se reporte à la figure 2, on voit que pour une charge donnée, la pression dans le vérin varie linéairement en fonction du carré de la vitesse de levage.

Par conséquent, si l'on trace le réseau des courbes caractéristiques à charge W constante dans le plan $(v^2, P)$ on obtient l'ensemble des droites représentées, et il s'en suit que, si l'on connaît la vitesse de levage v et donc $v^2$ ainsi que la pression P dans le vérin lors du levage d'une charge, on peut, par étalonnage, déduire cette charge W du diagramme de la figure 2.

En fait, on a également constaté que pour une vitesse de levage v donnée, la pression P dans le vérin variait linéairement en fonction de la charge W comme cela est représenté à la figure 3.

L'étalonnage du dispositif est par conséquent simple. Il s'effectue successivement avec deux charges étalons $W_0$ et $W_1$.

Pour chaque charge, on procède à deux levages à deux vitesses différentes en relevant les pressions correspondantes, ce qui permet de tracer les droites caractéristiques $W_0$ et $W_1$ de la figure 2, et d'en déduire leurs coefficients.

Lorsque, ultérieurement, une mesure est effectuée, on relève la vitesse v et la pression P (v).

De la vitesse v et des coefficients des droites $W_0$ et $W_1$, on peut déduire les pressions $P_0$ (v) et $P_1$ (v).

La figure 3 montre alors que l'on peut immédiatement obtenir la charge W par la relation :

$$\frac{W_1 - W}{W_1 - W_0} = \frac{P_1(v) - P(v)}{P_1(v) - P_0(v)}$$

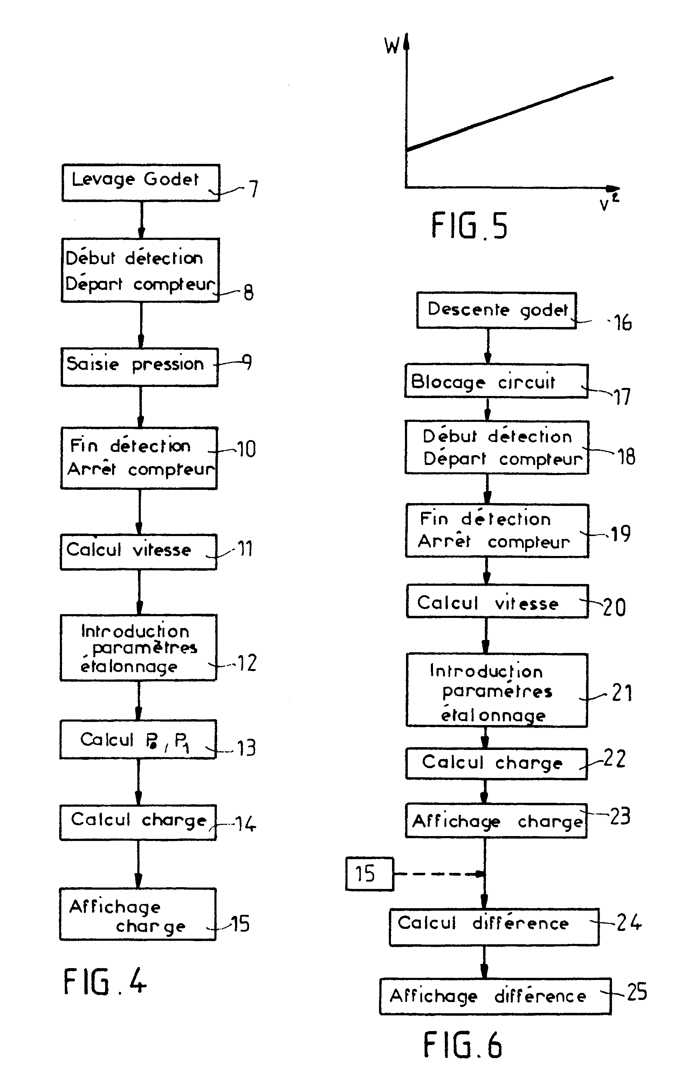

En pratique, une fois l'étalonnage effectué, l'unité de traitement 6 fonctionne comme représenté à la figure 4.

Le levage du godet 2 commence en 7.

En 8, le capteur 4 détecte le début du passage devant lui de la pièce métallique 5, ce qui provoque le démarrage d'un compteur contenu dans l'unité 6.

Pendant le comptage, on saisit en 9 la valeur de la pression dans le vérin 3, ou un ensemble de valeurs dont on effectue la moyenne.

En 10, le capteur 4 détecte la fin du passage de la pièce métallique 5, ce qui provoque l'arrêt du compteur.

La vitesse de levage peut alors être calculée en 11 connaissant la longueur de la pièce métallique 5 et la valeur contenue dans le compteur.

On introduit alors en 12 les paramètres d'étalonnages, c'est-à-dire les coefficients des droites $W_0$ et $W_1$ et on calcule en 13, à partir de la vitesse calculée en 11 et des paramètres d'étalonnage, les pressions $P_0$ (v) et $P_1$ (v).

On peut alors calculer en 14 la charge par la formule ci-dessus et afficher cette charge en 15.

Les figures 5 et 6 donnent un autre exemple de réalisation pour la mesure dynamique d'une charge à sa descente.

La figure 5 montre la courbe de variation de la charge en fonction du carré de la vitesse de descente, obtenue à partir de la vitesse de descente d'au moins deux charges étalons, les sections du circuit hydraulique étant bloquées à une valeur donnée constante.

La descente du godet 2 commence en 16.

En 17, on bloque les sections du circuit hydraulique à la même valeur qu'au cours de l'étalonnage.

En 18, le capteur 4 détecte le début du passage devant lui de la pièce métallique 5, ce qui provoque le démarrage d'un compteur contenu dans l'unité 6.

En 19, le capteur 4 détecte la fin du passage de la pièce métallique 5 ce qui provoque l'arrêt du compteur et la vitesse de descente peut alors être calculée en 20.

On introduit en 21 les paramètres d'étalonnage et on calcule la charge en 22.

Cette charge est affichée en 23 et, en liaison avec le chiffre obtenu en 15 au mouvement de montée précédent, on calcule en 24 la charge effectivement déversée lors du vidage du godet 2 et on l'affiche en 25.

Diverses variantes et modifications peuvent bien entendu être apportées aux exemples de réalisation qui précèdent sans sortir pour autant ni du cadre ni de l'esprit de l'invention.

## Revendications

1 - Procédé de mesure dynamique d'une charge en déplacement dans un plan vertical, cette charge subissant une force s'exerçant de bas en haut, caractérisé en ce que l'on détermine la valeur de ladite charge à partir de sa vitesse de déplacement en une portion déterminée de sa course et d'un paramètre présentant une relation avec ladite force dans cette même portion de course.

2 - Procédé selon la revendication 1, appliqué à une charge dont le déplacement vers le haut est effectué à l'aide d'un engin muni d'un vérin hydraulique, caractérisé en ce que l'on déduit la valeur de ladite force de la valeur de la pression P (v) dans le vérin lorsque la charge se trouve dans ladite portion de sa course.

3 - Procédé selon l'une des revendications 1 ou 2, caractérisé en ce que l'on traite les valeurs de la force et de la vitesse à partir d'un étalonnage d'au moins deux charges étalons pour au moins deux vitesses.

4 - Procédé selon la revendication 3, caractérisé en ce que l'on détermine à partir de l'étalonnage, les pressions $P_0$ (v) et $P_1$ (v) correspondant aux charges étalons $W_0$ et $W_1$ pour la vitesse de déplacement mesurée v et que l'on déduit la charge effective W à partir des pressions $P_0$ (v) et $P_1$ (v).

5 - Procédé selon la revendication 4, caractérisé en ce que l'on calcule la charge effective par la relation

$$\frac{W_1 - W}{W_1 - W_0} = \frac{P_1 (v) - P (v)}{P_1 (v) - P_0 (v)}$$

6 - Procédé selon l'une des revendications 1 à 5 appliqué à la mesure, à la descente, d'une charge dont le déplacement vers le haut est susceptible d'être effectué à l'aide d'un engin muni d'un vérin hydraulique, caractérisé en ce que, dans une portion déterminée de la course de descente, on maintient les sections du circuit hydraulique du vérin à une valeur donnée constante et on mesure la vitesse de déplacement de ladite charge.

7 - Procédé selon la revendication 6, caractérisé en ce que l'on traite les résultats de la valeur de la vitesse mesurée à partir d'un étalonnage des vitesses d'au moins deux charges étalons.

8 - Procédé selon la revendication 7, caractérisé en ce que l'on détermine à partir de l'étalonnage, les vitesses $v_0$ et $v_1$ correspondant aux charges étalons $W_0$ et $W_1$ dans ladite portion de la course et que l'on déduit la charge effective W à partir de la vitesse mesurée v.

9 - Procédé selon la revendication 8, caractérisé en ce que l'on calcule la charge effective par la relation

$$\frac{W_1 - W}{W_1 - W_0} = \frac{v_1^2 - v^2}{v_1^2 - v_0^2}$$

10 - Procédé selon l'une quelconque des revendications 1 à 9, caractérisé en ce que, pour obtenir au moins l'une des valeurs à mesurer, on effectue une série de mesures, on calcule une suite de moyennes mobiles de ces mesures et l'on prend pour valeur la première moyenne obtenue dont la différence avec la moyenne précédente est inférieure à un seuil déterminé.

11 - Dispositif pour la mise en oeuvre du procédé selon l'une quelconque des revendications 1 à 5, caractérisé en ce qu'il comprend un capteur (4) de la vitesse de montée de la charge dans une portion déterminée de sa course, des moyens de mesure (3) de la force subie de bas en haut par la charge pendant sa montée dans une portion déterminée de sa course, et des moyens de traitement (6) pour déduire de la vitesse de déplacement de la charge et de ladite force la valeur de ladite charge.

12 - Dispositif pour la mise en oeuvre du procédé selon l'une des revendications 6 à 9, caractérisé en ce qu'il comprend un capteur (4) de la vitesse de descente de la charge dans une portion déterminée de sa course et des moyens de traitement (6) pour déduire de la vitesse de descente mesurée, la valeur de ladite charge.

13 - Dispositif selon l'une des revendications 11 ou 12, caractérisé en ce que le capteur de vitesse est un capteur électromagnétique agencé pour coopérer avec une pièce métallique (5), le capteur et ladite pièce métallique étant en mouvement relatif lors du déplacement de la charge, la vitesse de ce déplacement étant déduite de la durée de passage de la pièce métallique devant le capteur.

14 - Dispositif selon l'une des revendications 1 à 13 dans lequel l'engin portant la charge dont la valeur est à mesurer est un godet (2) monté sur bras articulés et manoeuvré par vérin hydraulique, ledit godet étant rempli en position basse, étant vidé en position haute et revenant ensuite en position basse pour être rempli à nouveau, caractérisé en ce qu'il comporte, de première part, des moyens susceptibles de mesurer, à la montée et au passage dans une portion déterminée de la course du godet, la vitesse de levage du godet plein, des moyens susceptibles de mesurer dans les mêmes conditions, la pression dans le vérin, et des moyens de traitement pour déduire de la vitesse et de la pression mesurée la valeur de la charge contenue dans ledit godet, de deuxième part, des moyens susceptibles de mesurer, à la descente et au passage dans une portion déterminée de la course du godet, la vitesse dudit godet, des moyens susceptibles de maintenir les sections du circuit hydraulique à une valeur donnée constante lorsque ledit godet se trouve dans la zone de mesure, et des moyens de traitement pour déduire de cette vitesse la charge demeurant dans le godet, et de troisième part, des moyens pour déduire de la valeur de la charge à la montée du godet et de la valeur de la charge à sa descente, la valeur de la charge effectivement évacuée du godet.

FIG. 2

FIG. 3

FIG. 1

FIG.5

Levage Godet — 7

Début détection
Départ compteur — 8

Saisie pression — 9

Fin détection
Arrêt compteur — 10

Calcul vitesse — 11

Introduction
paramètres
étalonnage — 12

Calcul $P_0$, $P_1$ — 13

Calcul charge — 14

Affichage
charge — 15

FIG.4

Descente godet — 16

Blocage circuit — 17

Début détection
Départ compteur — 18

Fin détection
Arrêt compteur — 19

Calcul vitesse — 20

Introduction
paramètres
étalonnage — 21

Calcul charge — 22

Affichage charge — 23

15

Calcul différence — 24

Affichage différence — 25

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-2312006 (AB BOLINDER-MUNKTELL)<br>* page 1, lignes 1 - 7 *<br>* page 4, ligne 12 - page 5, ligne 25; figure * | 1, 2, 11 | G01G19/10 |
| Y | | 10, 13, 14 | |
| A | | 6, 12 | |
| | --- | | |
| Y | EP-A-246363 (OGNIBENE OLMES)<br>* page 3, ligne 26 - page 4, ligne 12 *<br>* page 13, lignes 16 - 27 * | 10 | |
| A | | 3, 4 | |
| | --- | | |
| Y | FR-A-2459964 (HY. BERGERAT,MONNOYEUR SA)<br>* page 2, lignes 31 - 33 * | 13 | |
| | --- | | |
| Y | PATENT ABSTRACTS OF JAPAN<br>vol. 9, no. 221 (P-386)(1944) 07 septembre 1985,<br>& JP-A-60 80721 (KIYATAPIRAA MITSUBISHI K.K.) 08 mai 1985,<br>* le document en entier * | 14 | |
| | --- | | **DOMAINES TECHNIQUES RECHERCHES (Int. Cl.5)** |
| A | WO-A-8802849 (BREAKTHRU INDUSTRIES,INC.)<br>* page 2, lignes 1 - 24 * | 14 | |
| | --- | | G01G |
| A | US-A-4230196 (E.D. SNEAD)<br>* colonne 5, lignes 40 - 52 * | 3, 4 | E02F |
| | ----- | | |

Le présent rapport a été établi pour toutes les revendications

| Lieu de la recherche | Date d'achèvement de la recherche | Examinateur |
|---|---|---|
| LA HAYE | 24 AOUT 1990 | GANCI P.A. |

EPO FORM 1503 03.82 (P0402)